# EUROPEAN PATENT SPECIFICATION

(11) **EP 0 740 894 B1**
(45) Date of publication and mention of the grant of the patent: **02.01.2003**
(21) Application number: 94926308.1
(22) Date of filing: 12.09.1994
(51) Int. Cl.: H04R 27/00, H04B 10/10

(54) **INFRARED COMMUNICATION SYSTEM**
INFRAROTÜBERTRAGUNGSSYSTEM
SYSTEME DE COMMUNICATION INFRAROUGE

(30) Priority: 28.09.1993 GB 9319929
(43) Date of publication of application: 06.11.1996
(73) Proprietor: CALEDONIAN AIRBORNE SYSTEMS LTD., Aberdeen AB2 OPD (GB)
(72) Inventor: SAMARAI, Laith Faris, Coral Villa, Bridge of Don, Aberdeen AB23 8DT (GB)
(74) Representative: Pacitti, Paolo
(86) International application number: GB9401988
(87) International publication number: WO95009517

(56) References cited:
- EP-A- 0 389 174
- DE-A- 2 840 713

## Description

This invention relates to cordless communication systems using infra red light. The invention is particularly, but not exclusively, useful in public address and entertainment systems for aircraft, especially helicopters.

It is customary in passenger-carrying helicopters to provide each passenger with a head set which acts as an ear defender. The head set receives background music and crew safety announcements. It is known to use an infra red cordless system to communicate with the individual head sets.

The known systems have two disadvantages:
1 Each passenger has an individual volume control switch which may be turned low if the background music is unacceptable. However, a user with the volume turned low is likely not to hear safety announcements.
2 Communication can be lost because of interference by direct or reflected sunlight.

EP 0389174 SONY describes wireless headphones for receiving sound, but does not address the problem of providing a communication system which discriminates between broadcasts of entertainment, and of essential information; or of defending the ears against dangerous noise levels.

DE 2840713 RECARO describes an audio amplifier system suitable for use in a vehicle. This system has multiple sets of loudspeakers, each of which has individual controls which can be overridden centrally. However this vehicle communication system delivers broadcasts from the amplifier to a number of fixed positions within the vehicle, rather than to individual passengers, and has no regard to safeguarding the hearing of each passenger.

In accordance with one aspect of the present invention, a communication system comprises a master station; and a plurality of receiving stations; wherein the master station includes a transmitter; the system uses infra red transmission between the transmitter and the receiving stations; each receiving station has a respective individual volume control; and the master station includes means for overriding the individual volume control of the receiving stations; characterised in that a receiving station includes an ear defending head set having left and right earpieces, and a plurality of photodetectors positioned on the head set and facing in different directions.

Preferably, the system is a system wherein said means for overriding the individual volume control of the receiving station comprises means in the master station for transmitting a code signal to each of said receiving stations; and means in each of said receiving stations responsive to said code signal to bypass the individual volume control of the receiving station.

Typically the system is a stereo system having two channels wherein said means in the master station for transmitting a code signal is adapted to transmit said signal on one channel, and said means in each of said receiving stations responsive to said code signal is adapted to disable said one channel, and to bypass the individual volume control of the other channel.

The code signal is suitably a continuous monotone.

From another aspect, the invention provides a receiving apparatus for use in an infra red communication system, the apparatus being in the form of a head set having left and right earpieces joined by a headband, the apparatus including a plurality of photodetectors positioned on the head set and facing in different directions.

Preferably, there are four photodetectors positioned one at the front and one at the rear of each earpiece.

Preferably, the apparatus includes circuit means operating to reduce the signal from a given photodetector as the light incident thereon increases.

The circuit means suitably comprises a feed forward system. The feed forward system may suitably include, for each photodetector, a load element which provides a load resistance which varies inversely with the output current of the photodetector. Preferably, the load element is a bipolar transistor, and the system includes a constant current source connected in parallel with the photodetector to the transistor emitter.

An embodiment of the invention will now be described, by way of example, with reference to the drawings, in which:
Fig. 1 is a schematic block diagram illustrating one form of the first aspect of the invention;
Fig. 2 is a plan view of a headset illustrating an embodiment of the second aspect of the invention;
Fig. 3 is a circuit diagram illustrating a feed forward system used in the embodiment of Fig. 2; and
Figs. 4a and 4b are graphs illustrating the operation of the circuit of Fig. 3.

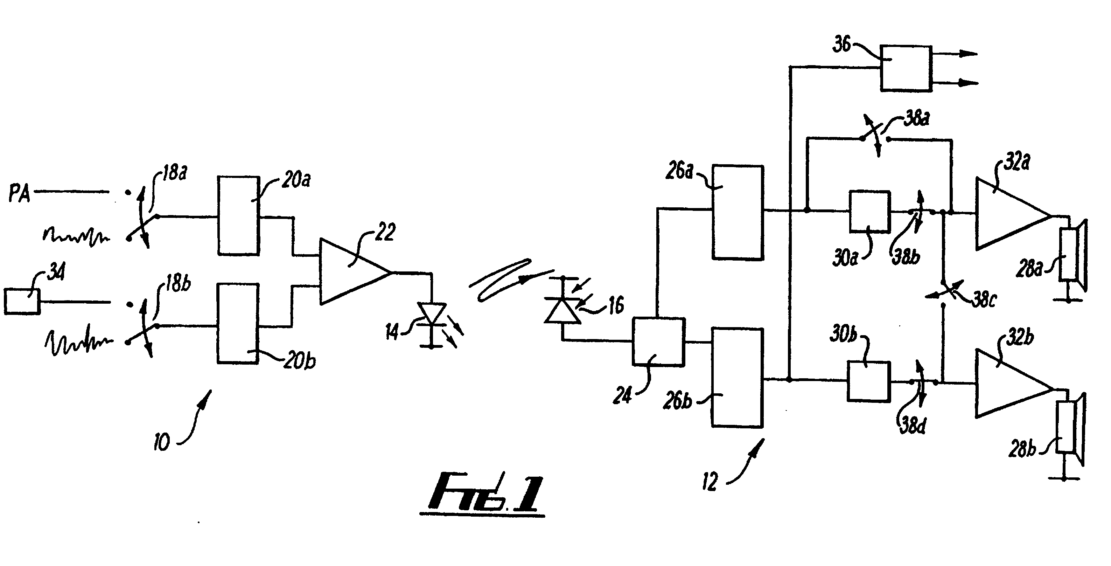

Referring to Fig. 1, a public address (PA) and inflight entertainment (IFE) system for use in helicopters uses infrared (IR) transmission from a central unit 10 to a plurality of headsets such as 12. The central unit 10 includes one or more IR emitting diodes 14, and each headset includes IR photodiodes 16.

In normal use, left and right music signals are supplied from a source such as a tape deck via switching means 18a, 18b to left and right modulators 20a, 20b. The modulated signals are amplified by amplifier 22 and applied to the IR emitting diode 14 for transmission in the cabin space.

The signal received at a given headset is detected by the photodiode 16 and receiver circuit 24. The left and right channel information is recovered by demodulators 26a, 26b and applied to right and left earpieces 28a, 28b via volume controls 30a, 30b and amplifiers 32a, 32b. The user may thus select a desired volume for listening to the IFE.

When a PA announcement is to be made, the switching means 18a, 18b is operated to connect the right channel modulator 20a to a PA source (such as a microphone) and the left channel modulator 20b to a signal generator 34 producing a pure sine wave at a predetermined frequency. The demodulated sine wave at the output of the demodulator 26b in the headset is detected by a tone detector 36 which operates switching means 38a, 38b, 38c, 38d to switch the volume controls 30a, 30b out of circuit and to connect the demodulated PA signal from the demodulator 26a to both amplifiers 32a, 32b.

Thus when a PA announcement is made, user control of listening volume is overridden and all headset users receive the announcement at a fixed volume.

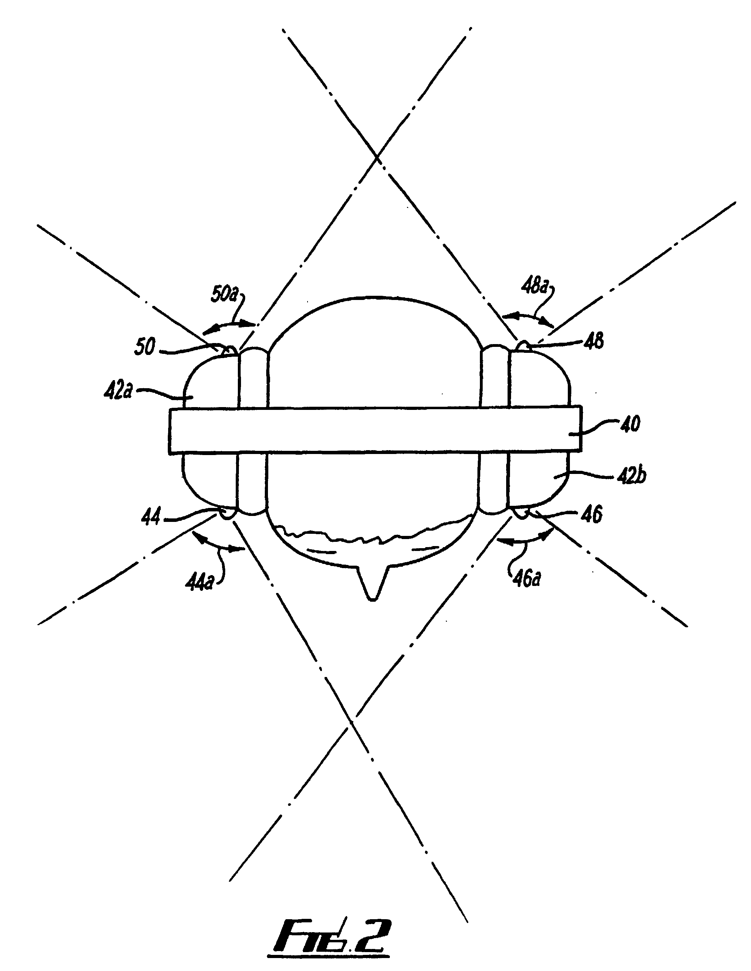

Turning to Fig. 2, the headset for use in the system comprises a headband 40 supporting ear shells 42a, 42b containing loudspeakers in the normal manner. The headset is provided with four receiving photodiodes 44, 46, 48, 50 arranged one forward and one aft on each of the ear shells 42a, 42b so as to provide four arcs of visibility of reception 44a, 46a, 48a, 50a. In the arrangement shown, the forward arcs and the aft arcs overlap along the centre line of the user's head. This is suitable for accommodating normal head movements in a cabin provided with IR transmitters on the forward and aft bulkheads. Other arrangements of visibility arcs may be used for other situations.

In aircraft use, an IR system is subject to interference by strong sunlight. The interfering sunlight is likely to come from a single direction, typically through a cabin window, although interference from two directions is possible owing to reflection from a reflective surface within the cabin. However, interference from four directions is inherently unlikely. The headset of Fig. 2 is accordingly provided with circuit means for dealing with such interference, as will now be described.

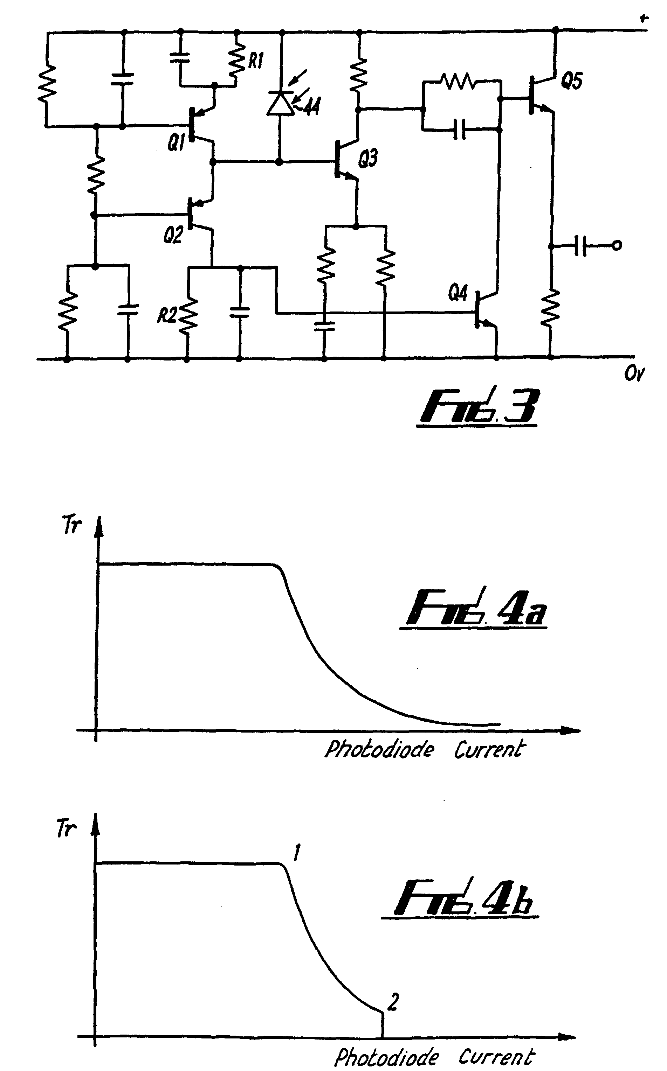

Fig. 3 illustrates an exemplary detector circuit used with one of the photodiodes 44, the other photodiodes each being provided with similar detector circuits.

The photodiode 44 produces a current which is a function of the incident light energy and conventionally the signal for amplification would be recovered as the voltage across a load resistor on the photodiode anode. However, with such an arrangement strong sunlight interferes with reception in three modes, namely:
(1) Strong light induces the current generator to produce large quantities of dc current which extend the voltage produced by the load beyond the supply voltage range; hence all information is lost.
(2) The light will manifest broadband white noise generated at the most sensitive element in the circuit, i.e. before preamplification.
(3) The large dc current being produced by the photodiode makes the photodiode less sensitive to light deviations, further interfering with the reception capabilities of the system.

Of these, the first two can be mitigated by using dc active feed back and by reducing reception bandwidth, but the third mode cannot be reduced by these means.

In Fig. 3, the photodiode 44 is connected in a feed forward system which acts to increase the transresistance of the system as the incident light increases. Specifically, the photodiode load includes the emitter-collector path of bipolar junction transistor Q2. As the photodiode current varies between typically 10 nA and 10 mA, the dynamic resistance of Q2 emitter will vary between approximately 250 kOhm and 25 Ohm.

This result is desirable in itself, as it gives discrimination against high levels of noise induced by high light intensities. However, the value of 250 kOhm at low light levels would reduce the system bandwidth below 10 kHz and large circuit noises would also be induced.

To meet this point, the emitter of Q2 is connected in parallel to the photodiode 44 and to a stabilized current source provided by transistor Q1. If the current supplied by Q1 is set at, say, 6 µA then the largest value of the Q2 emitter resistance is set at approximately 4 kOhm, which is in accordance with the general requirements of the system.

The circuit as thus far described gives a transresistance characteristic as illustrated in Fig. 4a. However, the upper limit of the photodiode current is around 10 mA, which would give a transresistance of about 2.5 Ohm. It would be beneficial to reduce the eventual transresistance to zero, and this is achieved using Q4 and R2.

At some prescribed photodiode current, the voltage generated at R2 will exceed Vbe and thus reduce the output voltage of Q5 to zero. This results in a modified transresistance characteristic as shown in Fig. 4b, with the points 1 and 2 being readily set by choice of R1 and R2.

The circuit of Fig. 3 has a high degree of immunity to fluctuations in dc supply voltage, very low circuit noise (typically about 800 nV), a high bandwidth (3 dB limit typically 310 kHz), and low power consumption (typically 1.2 mW). These advantages are in addition to the rejection of interference from ambient sunlight. Using surface mount technology, the circuit of Fig. 3 can be implemented with a low component count in an area of about 3.2 square centimetres (0.5 square inches).

## Claims

1. A communication system comprising:
a master station; and
a plurality of receiving stations (12) ;
wherein:
said master station includes a transmitter (10); said system uses infra red transmission between the transmitter (10) and the receiving stations (12);
each receiving station (12) has a respective individual volume control (30a, 30b); and
said master station includes means for overriding the individual volume control of the receiving stations (12);
**characterised in that** a receiving station (12) includes an ear defending head set having left and right earpieces (42a, 42b), and
a plurality of photodetectors (44, 46, 48, 50) positioned on the head set and facing in different directions.

2. A system according to Claim 1 wherein said receiving station (12) includes four photodetectors (44, 46, 48, 50) positioned one at the front and one at the rear of each earpiece (42a, 42b).

3. A system according to any preceding claim including circuit means adapted to operate to reduce the signal from a given photodetector (44, 46, 48, 50) as light incident thereon increases.

4. A system according to Claim 2 or Claim 3 in which the circuit means comprises a feed-forward system.

5. A system according to any preceding claim wherein said means for overriding the individual volume control of a receiving station comprises:
means (34) in the master station for transmitting a code signal to each of said receiving stations; and means (36) in each of said receiving stations responsive to said code signal to bypass the individual volume control (30a, 30b) of the receiving station (12).

6. A system according to any preceding claim which is a stereo system having two channels wherein said means in the master station for transmitting a code signal is adapted to transmit said signal on one channel, and said means (36) in each of said receiving stations responsive to said code signal is adapted to disable said one channel, and to bypass the individual volume control (30a) of the other channel.

7. A system according to Claim 5 or Claim 6 in which the code signal is a continuous monotone.

8. A receiving station in the form of receiving apparatus adapted for use in the system of any preceding claim, comprising a head set having left and right earpieces (42a, 42b), the apparatus including a plurality of photodetectors (44, 46, 48, 50) positioned on the head set and facing in different directions.

9. Apparatus according to Claim 8, in which there are four photodetectors (44, 46, 48, 50) positioned one at the front and one at the rear of each earpiece (42a, 42b).

10. Apparatus according to Claim 8 or Claim 9, including circuit means operating to reduce the signal from a given photodetector (44, 46, 48, 50) as the light incident thereon increases.

11. Apparatus according to Claim 10, in which the circuit means comprises a feed-forward system.

12. Apparatus according to Claim 11, in which the feed-forward system, for each photodetector (44, 46, 48, 50), includes a load element which provides a load resistance which varies inversely with the output current of the photodetector (44, 46, 48, 50).

13. Apparatus according to Claim 12, in which the load element is a bipolar transistor.

14. Apparatus according to Claim 13, including a constant current source connected in parallel with the photodetector to the transistor emitter.

## Patentansprüche

1. Ein Übermittlungssystem, bestehend aus:
einer Sendestation; und
einer Vielzahl von Empfangsstationen (12);
wobei:
die Sendestation einen Sender (10) umfasst;
das System zwischen dem Sender (10) und den Empfangsstationen (12) Infrarotübertragung verwendet;
jede Empfangsstation (12) jeweils eine eigene Lautstärkenregelung (30a, 30b) aufweist; und
die Sendestation ein Mittel zur Außerkraftsetzung der einzelnen Lautstärkenregelung der Empfangsstationen (12) umfasst;
**dadurch gekennzeichnet, dass** eine Empfangsstation (12) das Ohr schützende Kopfhörer mit linken und rechten Hörmuscheln (42a, 42b) und
eine Vielzahl von Photodetektoren (44, 46, 48, 50), die auf dem Kopfhörer angeordnet sind und in verschiedene Richtungen weisen, umfasst.

2. System gemäß Anspruch 1, wobei die Empfangsstation (12) vier Photodetektoren (44, 46, 48, 50) umfasst, wobei jeweils einer an der Vorderseite und einer an der Hinterseite jeder Hörmuschel (42a, 42b) angeordnet ist.

3. System gemäß einem der vorhergehenden Ansprüche, das ein so ausgelegtes Schaltungsmittel umfasst, dass dieses das Signal von einem gegebenen Photodetektor (44, 46, 48, 50) reduziert, während sich darauf einfallendes Licht verstärkt

4. System gemäß Anspruch 2 oder Anspruch 3, wobei das Schaltungsmittel aus einem Vorwärtskopplungssystem besteht.

5. System gemäß einem der vorhergehenden Ansprüche, wobei das Mittel zur Außerkraftsetzung der eigenen Lautstärkenregelung einer Empfangsstation aus Folgendem besteht:
einem Mittel (34) in der Sendestation zur Übertragung eines Codesignals an jede der Empfangsstationen; und einem Mittel (36) in jeder dieser auf dieses Codesignal reagierenden Empfangsstationen, um die einzelne Lautstärkenregelung (30a, 30b) der Empfangsstation (12) zu umgehen.

6. System gemäß einem der vorhergehenden Ansprüche, das ein Stereosystem mit zwei Kanälen ist, wobei das Mittel in der Sendestation zur Übertragung eines Codesignals so ausgelegt ist, um dieses Signal auf einem Kanal zu übertragen, und wobei das Mittel (36) in jeder der auf das Codesignal reagierenden Empfangsstationen so ausgelegt ist, um diesen einen Kanal zu sperren und um die eigene Lautstärkenregelung (30a) des anderen Kanals zu umgehen.

7. System gemäß Anspruch 5 oder Anspruch 6, wobei das Codesignal ein kontinuierlicher Einton ist.

8. Eine Empfangsstation in Form einer Empfangsvorrichtung, die zur Verwendung in dem System gemäß einem der vorhergehenden Ansprüche ausgelegt ist, bestehend aus einem Kopfhörer mit linken und rechten Ohrmuscheln (42a, 42b), wobei die Vorrichtung eine Vielzahl von Photodetektoren (44, 46, 48, 50), die auf dem Kopfhörer angeordnet sind und in verschiedene Richtungen weisen, umfasst.

9. Vorrichtung gemäß Anspruch 8, die vier Photodetektoren (44, 46, 48, 50) aufweist, wobei einer jeweils an der Vorderseite und einer an der Hinterseite jeder Hörmuschel (42a, 42b) angeordnet ist.

10. Vorrichtung gemäß Anspruch 8 oder Anspruch 9, die ein so ausgelegtes Schaltungsmittel umfasst, dass dieses das Signal von einem gegebenen Photodetektor (44, 46, 48, 50) reduziert, während sich darauf einfallendes Licht verstärkt.

11. Vorrichtung gemäß Anspruch 10, wobei das Schaltungsmittel aus einem Vorwärtskopplungssystem besteht.

12. Vorrichtung gemäß Anspruch 11, wobei das Vorwärtskopplungssystem für jeden Photodetektor (44, 46, 48, 50) ein Lastelement umfasst, das einen Lastwiderstand, der sich umgekehrt zum Ausgangsstrom des Photodetektors (44, 46, 48, 50) verändert, bereitstellt.

13. Vorrichtung gemäß Anspruch 12, wobei das Lastelement ein Bipolartransistor ist.

14. Vorrichtung gemäß Anspruch 13, die eine konstante Stromquelle, die parallel mit dem Photodetektor mit dem Emitter des Transistors verbunden ist, umfasst.

## Revendications

1. Un système de communication comprenant :
une station maîtresse ; et
une pluralité de stations réceptrices (12) ;
dans lequel :
ladite station maîtresse comporte un transmetteur (10) ;
ledit système utilise une transmission infrarouge entre le transmetteur (10) et les stations réceptrices (12) ;
chaque station réceptrice (12) possède une commande de volume individuelle respective (30a, 30b) ; et
ladite station maîtresse comporte un moyen destiné à outrepasser la commande de volume individuelle des stations réceptrices (12) ;
**caractérisé en ce qu'**une station réceptrice (12) comporte un casque d'écoute anti-bruit possédant des écouteurs gauche et droit (42a, 42b), et
une pluralité de photodétecteurs (44, 46, 48, 50) positionnés sur le casque d'écoute et tournés dans différentes directions.

2. Un système selon la revendication 1 dans lequel ladite station réceptrice (12) comporte quatre photodétecteurs (44, 46, 48, 50) positionnés un à l'avant et un à l'arrière de chaque écouteur (42a, 42b).

3. Un système selon n'importe quelle revendication précédente comportant un moyen constituant circuit adapté pour fonctionner afin de réduire le signal provenant d'un photodétecteur donné (44, 46, 48, 50) à mesure que de la lumière incidente sur celui-ci augmente.

4. Un système selon la revendication 2 ou la revendication 3 dans lequel le moyen constituant circuit comprend un système à action directe.

5. Un système selon n'importe quelle revendication précédente dans lequel ledit moyen destiné à outrepasser la commande de volume individuelle d'une station réceptrice comporte :
un moyen (34) dans la station maîtresse destiné à transmettre un signal codé à chacune desdites stations réceptrices ; et un moyen (36) dans chacune desdites stations réceptrices sensible audit signal codé afin de placer en dérivation la commande de volume individuelle (30a, 30b) de la station réceptrice (12).

6. Un système selon n'importe quelle revendication précédente qui est un système stéréo possédant deux canaux dans lequel ledit moyen dans la station maîtresse destiné à transmettre un signal codé est adapté pour transmettre ledit signal sur un canal, et ledit moyen (36) dans chacune desdites stations réceptrices sensible audit signal codé est adapté pour invalider cedit canal et pour placer en dérivation la commande de volume individuelle (30a) de l'autre canal.

7. Un système selon la revendication 5 ou la revendication 6 dans lequel le signal codé est un ton monocorde continu.

8. Une station réceptrice sous forme d'appareil récepteur adapté pour être utilisé dans le système de n'importe quelle revendication précédente, comprenant un casque d'écoute possédant des écouteurs gauche et droit (42a, 42b), l'appareil comportant une pluralité de photodétecteurs (44, 46, 48, 50) positionnés sur le casque d'écoute et tournés dans différentes directions.

9. Appareil selon la revendication 8, dans lequel il y a quatre photodétecteurs (44, 46, 48, 50) positionnés un à l'avant et un à l'arrière de chaque écouteur (42a, 42b).

10. Appareil selon la revendication 8 ou la revendication 9, comportant un moyen constituant circuit fonctionnant afin de réduire le signal provenant d'un photodétecteur donné (44, 46, 48, 50) à mesure que la lumière incidente sur celui-ci augmente.

11. Appareil selon la revendication 10, dans lequel le moyen constituant circuit comprend un système à action directe.

12. Appareil selon la revendication 11, dans lequel le système à action directe, pour chaque photodétecteur (44, 46, 48, 50), comporte un élément de charge qui fournit une résistance de charge qui varie inversement avec le courant de sortie du photodétecteur (44, 46, 48, 50).

13. Appareil selon la revendication 12, dans lequel l'élément de charge est un transistor bipolaire.

14. Appareil selon la revendication 13, comportant une source de courant constant branchée à l'émetteur de transistor en parallèle avec le photodétecteur.
